# EUROPÄISCHE PATENTSCHRIFT

(11) **EP 4 286 706 B1**
(45) Veröffentlichungstag und Bekanntmachung des Hinweises auf die Patenterteilung: **09.04.2025**
(21) Anmeldenummer: 22176071.3
(22) Anmeldetag: 30.05.2022
(51) Int. Cl.: F16F 3/087, F16F 1/54

(54) **SCHWINGUNGSDÄMPFER UND SCHWINGFÖRDERSYSTEM**
VIBRATION DAMPER AND VIBRATION CONVEYOR SYSTEM
AMORTISSEUR DE VIBRATIONS ET SYSTÈME DE TRANSPORT À VIBRATIONS

(43) Veröffentlichungstag der Anmeldung: 06.12.2023
(73) Patentinhaber: Rosta AG, 5502 Hunzenschwil (CH)
(72) Erfinder: PELAGATTI, Marco, 5106 Veltheim (CH); BOLLIGER, Iris, 5503 Schafisheim (CH); VOVCHOK, Ivan, 8200 Schaffhausen (CH); BAUMANN, Patrick, 4600 Olten (CH)
(74) Vertreter: EGLI-EUROPEAN PATENT ATTORNEYS

(56) Entgegenhaltungen:
- BE-A- 514 289
- CN-A- 101 769 355
- CN-U- 207 393 820

## Beschreibung

Die vorliegende Erfindung betrifft einen Schwingungsdämpfer und ein Schwingfördersystem.

Schwingungsdämpfer, wie z.B. CN101769355, sind aus dem Stand der Technik bekannt. Schwingungsdämpfer können beispielsweise bei Schwingfördersystemen verwendet werden, beispielsweise bei Linear- oder Kreisschwingern von Rüttelanlagen. Ein Ziel bei Schwingungsdämpfern besteht darin, eine Eigenfrequenz von Schwingungsdämpfern zu reduzieren, ihre Tragkraft zu erhöhen und ihre Stabilität zu verbessern.

Eine Aufgabe der vorliegenden Erfindung besteht darin, einen verbesserten Schwingungsdämpfer und ein verbessertes Schwingfördersystem bereitzustellen. Diese Aufgabe wird durch einen Schwingungsdämpfer und ein Schwingfördersystem mit den Merkmalen der jeweils unabhängigen Ansprüche gelöst. Vorteilhafte Weiterbildungen sind in abhängigen Ansprüchen angegeben.

Ein hier beschriebener Schwingungsdämpfer weist vier Torsionselemente. Jedes Torsionselement weist ein Innenteil, ein Außenteil und zumindest ein elastisches Element auf. Das Innenteil ist im Außenteil angeordnet. Das elastische Element ist zwischen dem Innenteil und dem Außenteil angeordnet und lagert das Innenteil relativ zum Außenteil derart, dass bei einer Auslenkung des Innenteils und des Außenteils relativ zueinander eine Rückstellkraft zwischen dem Innenteil und dem Außenteil bewirkt wird. Die Torsionsfederelemente sind bezogen auf eine erste Richtung übereinander angeordnet. Ein zweites Torsionsfederelement ist über einem ersten Torsionsfederelement angeordnet. Ein drittes Torsionsfederelement ist über dem zweiten Torsionsfederelement angeordnet. Ein viertes Torsionsfederelement ist über dem dritten Torsionsfederelement angeordnet. Das Außenteil des ersten Torsionsfederelementes ist zur starren Anbindung des Schwingungsdämpfers ausgebildet. Das Innenteil des ersten Torsionsfederelementes ist mit dem Innenteil des dritten Torsionsfederelementes starr verbunden. Das zweite Torsionsfederelement ist starr mit dem dritten Torsionsfederelement verbunden. Das Innenteil des zweiten Torsionsfederelementes ist mit dem Innenteil des vierten Torsionselementes starr verbunden. Das Außenteil des vierten Torsionselementes ist zur starren Anbindung des Schwingungsdämpfers ausgebildet.

Dadurch, dass das erste Hebelelement das erste Torsionsfederelement mit dem dritten Torsionsfederelement und das zweite Hebelelement das zweite Torsionsfederelement mit dem vierten Torsionsfederelement verbindet, sind die Torsionsfederelemente miteinander über Kreuz verbunden. Gegenüber einer Anordnung, bei der das erste Hebelelement das erste Torsionsfederelement mit dem zweiten Torsionsfederelement verbindet und das zweite Hebelelement das dritte Torsionsfederelement mit dem vierten Torsionsfederelement verbindet, ist eine entlang der ersten Richtung bemessene Höhe des Schwingungsdämpfers reduziert.

Vorteilhafterweise kann ein federnd zu lagerndes Objekt, beispielsweise eine schwingende Masse eines Schwingfördersystems, dadurch derart gelagert werden, dass ein Schwerpunkt besonders nah an einer Basis ausgebildet ist, mit der der Schwingdämpfer verbindbar ist. Dadurch ist ein System mit solchen Schwingungsdämpfern im Betrieb stabiler und sicherer.

Gleichzeitig ermöglicht es der Schwingungsdämpfer längere Hebelelemente bei vergleichbarer Höhe des Schwingungsdämpfers zu verwenden. Dadurch kann eine Eigenfrequenz des Schwingungsdämpfers besonders klein sein, wodurch ein Verschleiß des Schwingungsdämpfers im Betrieb eines schwingenden und vom Schwingungsdämpfer gedämpften Systems reduziert ist. Die grö-βere Einfederung und somit tiefere Eigenfrequenz gewährleisten eine höhere Schwingungs-Tilgung. Die Isolierwirkung durch die Schwingelemente ist grösser.

Andererseits ermöglicht es die Verbindung der Torsionsfederelemente mit den Hebelelementen über Kreuz, dass ein von den Hebelelementen eingeschlossener Winkel bei gleichbleibender Höhe des Schwingungsdämpfers vergrößert werden kann, um eine Traglast des Schwingungsdämpfers zu erhöhen.

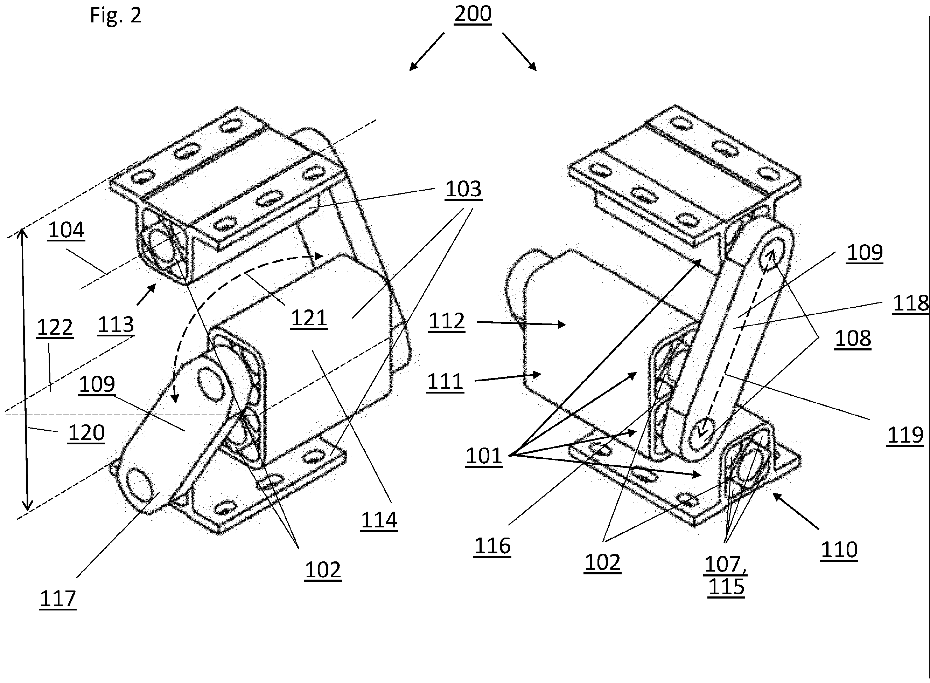

In einer Ausführungsform sind die Torsionsfederelemente über Hebelelemente starr miteinander verbunden. Das erste Hebelelement und das zweite Hebelelement sind entlang einer senkrecht zur ersten Richtung verlaufenden Längsrichtung auf sich gegenüberliegenden Seiten der Torsionsfederelemente angeordnet. Vorteilhafterweise ermöglicht diese Anordnung das Verbinden der Torsionsfederelemente mit den Hebelelementen über Kreuz. ((Fig.2))

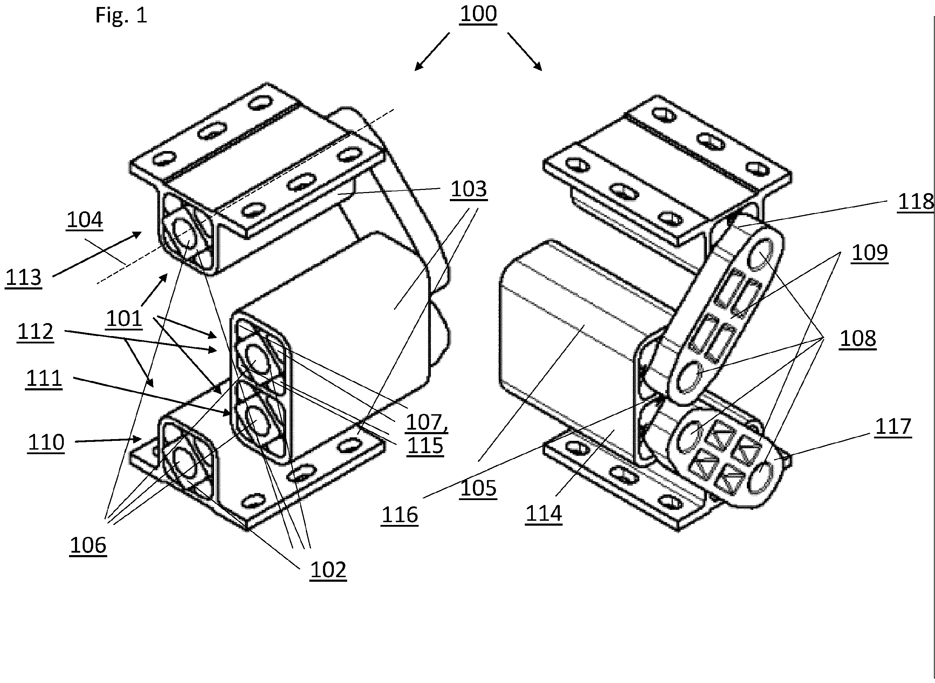

In einer Ausführungsform sind die Torsionsfederelemente über Hebelelemente starr miteinander verbunden. Das erste Hebelelement und das zweite Hebelelement sind entlang einer senkrecht zur ersten Richtung verlaufenden Längsrichtung einseitig an den Torsionsfederelementen angeordnet. Vorteilhafterweise ermöglicht diese Anordnung ein einfaches Anordnen elastischer Elemente zwischen den Innenteilen und den Außenteilen, da die Torsionsfederelemente an einer von den Hebelelementen abgewandten Seite zugänglich sind. ((Fig.1))

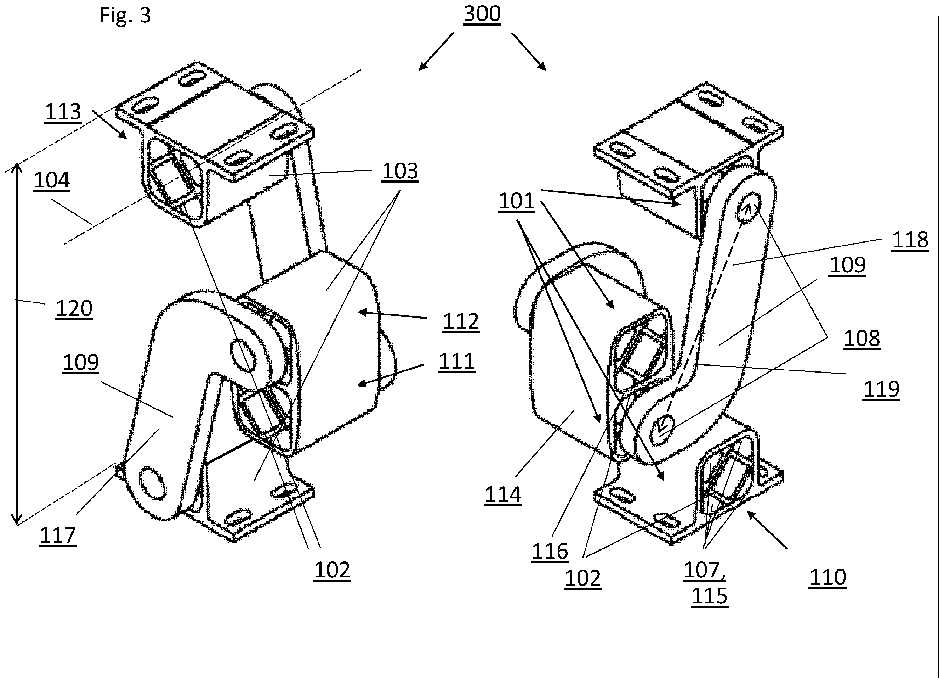

In einer Ausführungsform sind die Hebelelemente gewinkelt und/oder gekrümmt ausgebildet. Vorteilhafterweise kann dadurch eine in erster Richtung bemessene Höhe des Schwingungsdämpfers reduziert sein, wodurch der Schwingungsdämpfer steifer ausgebildet ist und beispielsweise beim Einsatz in einem Schwingfördersystem höheren Belastungen standhalten kann. Dies wird dadurch ermöglicht, dass ein Abstand eines Schwerpunkts einer federnd gelagerten schwinden Masse in Bezug auf eine Basis reduziert wird. ((Fig.3))

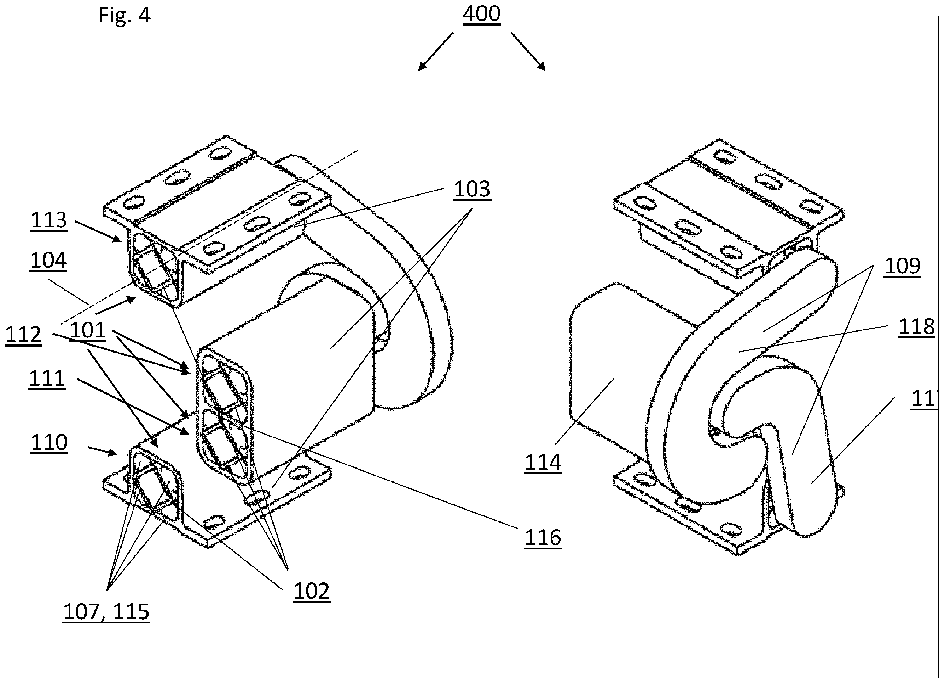

In einer Ausführungsform sind die Hebelelemente ineinandergreifend angeordnet. Vorteilhafterweise ermöglicht dies eine einseitige Anordnung der Hebelelemente in Bezug auf die Torsionselemente. ((Fig.4))

In einer Ausführungsform sind die Torsionsfederelemente bezüglich einer senkrecht zur ersten Richtung verlaufenden Ebene symmetrisch angeordnet. Vorteilhafterweise verteilen sich bei Belastungen wirkende Kräfte gleichermaßen auf die Torsionsfederelemente, wodurch der Schwingungsdämpfer besonders effizient genutzt werden kann.

In einer Ausführungsform weist jedes Außenteil der Torsionsfederelemente ein hohles Mehrkantprofil auf. Jedes Innenteil der Torsionsfederelemente weist ein Mehrkantprofil auf. Jeweils ein Innenteil ist derart in einem Außenteil eines Torsionsfederelements angeordnet, dass Außenkanten der Innenteile jeweils Innenflächen der Außenteil zugewandt angeordnet sind. Jedes Torsionsfederelement weist eine Mehrzahl von zwischen dem Innenteil und dem Außenteil angeordneten elastischen Elementen auf. Die elastischen Elemente liegen jeweils an Außenflächen des Innenteils und an Innenflächen und/oder Innenkanten des Außenteils an.

Ein Schwingfördersystem weist eine schwingende Masse und eine Mehrzahl von Schwingungsdämpfern gemäß einem der genannten Ausführungsformen auf. Jeder Schwingungsdämpfer ist mit der schwingenden Masse und einer Basis verbindbar.

Der Idee, die dem Schwingungsdämpfer zu Grunde liegt wird in der nachfolgenden Beschreibung im Zusammenhang mit schematischen Zeichnungen näher erläutert.

Es zeigen:
Fig. 1: einen Schwingungsdämpfer gemäß dem Stand der Technik in zwei verschiedenen perspektivischen Ansichten;
Fig. 2: einen Schwingungsdämpfer gemäß einer ersten Ausführungsform in zwei verschiedenen perspektivischen Ansichten;
Fig. 3: einen Schwingungsdämpfer gemäß einer zweiten Ausführungsform in zwei verschiedenen perspektivischen Ansichten;
Fig. 4: einen Schwingungsdämpfer gemäß einer dritten Ausführungsform in zwei verschiedenen perspektivischen Ansichten; und
Fig. 5: ein Schwingfördersystem mit Schwingungsdämpfern in einer Seitenansicht.

Fig. 1 zeigt schematisch einen Schwingungsdämpfer 100 gemäß dem Stand der Technik in zwei verschiedenen perspektivischen Ansichten. Der Schwingungsdämpfer 100 kann auch als Schwingelement bezeichnet werden.

Der Schwingungsdämpfer 100 weist beispielhaft vier Torsionsfederelemente 101 auf. Jedes Torsionsfederelement 101 weist ein Innenteil 102 und ein Außenteil 103 auf. Das Außenteil 103 weist beispielhaft ein metallisches Material auf, beispielsweise kann das Außenteil 103 als Stahlgussbauteil ausgeführt sein. Darüber hinaus ist es möglich, dass das Außenteil 103 zumindest einen Kunststoff und/oder zumindest ein metallisches Material aufweist. Das Außenteil 103 kann jedoch auch ein anderes Material oder eine andere Materialskombination aufweisen.

Gemäß der beispielhaften Ausführungsform der Fig. 1 weist das Außenteil 103 entlang einer Längsrichtung 104 ein hohles Vierkantprofil mit offenen Enden auf. Längskanten 105 des Außenteil 103 sind beispielhaft parallel zur Längsrichtung 104 an einer Innenseite (Innenkante) und/oder an einer Außenseite (Außenkante) abgerundet ausgebildet. In alternativen Ausführungsformen kann das Außenteil 103 beispielsweise auch als hohles Mehrkantprofil mit einem polygonalen, n-eckigen Querschnitt oder als Hohlkörper mit kreisrundem, ovalem oder anders geformtem Querschnitt ausgeführt sein, wobei die Längskanten 105 an der Innenseite und/oder an der Außenseite des Außenteils 103 abgerundet sein können. In bevorzugten Ausführungsformen weisen die Längskanten 105 des Außenteils 103 eine Länge von bis zu 500 mm und Kanten quer zur Längsrichtung 104 eine Länge von bis zu 100 mm auf. Die Maße des Außenteils 103 sind jedoch nicht auf die angegebenen Wertebereiche beschränkt.

Das Innenteil 102 weist entlang der Längsrichtung 104 ebenfalls beispielhaft ein hohles Vierkantprofil mit offenen Enden auf. Längskanten des Innenteils 102 sind ebenfalls beispielhaft parallel zur Längsrichtung 104 an einer Innenseite (Innenkante) und/oder an einer Außenseite (Außenkante) abgerundet ausgebildet. In alternativen Ausführungsformen kann das Innenteil 102 beispielsweise auch als hohles Mehrkantprofil mit einem polygonalen, n-eckigen Querschnitt, oder als Hohlkörper mit kreisrundem, ovalem oder anders geformtem Querschnitt ausgeführt sein, wobei die Längskanten an der Innenseite und/oder an der Außenseite des Innenteils 102 abgerundet sein können. Das Außenteil 103 und das Innenteil 102 können dasselbe Material oder verschiedene Materialien aufweisen. In einer Ausführungsform weist das Innenteil 102 beispielsweise ein metallisches Material auf. Das Innenteil 102 kann jedoch ein anderes Material oder eine andere Materialskombination aufweisen.

Das Innenteil 102 ist im Außenteil 103 angeordnet. Dabei ragen die Enden des Innenteils 102 beispielhaft entlang der Längsrichtung 104 aus dem Außenteil 103 heraus, wodurch beispielsweise eine Befestigung von nicht zum Schwingungsdämpfer 100 gehörenden Bauteilen vereinfacht werden kann, beispielsweise von federnd zu lagernden oder zu dämpfenden Elementen einer Maschine. Das Innenteil 102 weist beispielhaft eine runde oder eckige Durchgangsöffnung 106 auf, die sich parallel zur Längsrichtung 104 durch das Innenteil 102 erstreckt. Die Durchgangsbohrung 106 dient der Verbindung des Innenteils 102 mit einem Verbindungselement 108, beispielsweise mit einer Welle, einer Stange oder mit einem Bolzen. Optional ist es möglich, dass die Durchgangsbohrung 106 zumindest in ihren Öffnungsbereichen mit einem Innengewinde oder einer anderen Befestigungsstruktur versehen ist.

In alternativen Ausführungsformen kann statt einer Durchgangsbohrung 106 stirnseitig des Innenteils 102 beispielsweise jeweils eine Sackbohrung vorgesehen sein, die jeweils mit einem Gewinde oder einer anderen Befestigungsstruktur versehen sein kann. In alternativen Ausführungsformen sind statt einer runden Durchgangsbohrung 106 oder runden Sackbohrungen anders geformte Durchgangslöcher oder Sacklöcher, beispielsweise Löcher mit einem polygonalen Querschnitt vorgesehen, die jeweils mit einem Gewinde oder einer anderen Befestigungsstruktur versehen sein können. Das Innenteil 102 kann auch eine Mehrzahl von parallel zueinander verlaufenden Durchgangsbohrungen 106, Sackbohrungen oder andere Durchgangslöcher 106 und Sacklöcher zum Verbinden mit einem Verbindungselement 108 oder mit einer Mehrzahl von Verbindungselementen 108 aufweisen.

Das Außenteil 103 und das Innenteil 102 weisen hinsichtlich ihrer Geometrie beispielhaft einander entsprechende Querschnittsformen auf, da es sich jeweils um ein Vierkantprofil handelt. In alternativen Ausführungsformen können das Außenteil 103 und das Innenteil 102 auch andere, insbesondere voneinander verschiedene Formen, aufweisen. Beispielsweise kann das Innenteil 102 ein Dreikantenprofil aufweisen. Das Außenteil 103 kann beispielsweise ebenfalls ein Dreikantprofil aufweisen. Das Außenteil 103 kann jedoch auch einen runden Querschnitt aufweisen. Das Innenteil 102 ist derart im Außenteil 103 angeordnet, dass Außenkanten des Innenteils 102 Innenflächen des Außenteils 103 zugewandt angeordnet sind.

Jedes Torsionsfederelement 101 weist jeweils eine Mehrzahl von zwischen dem Innenteil 102 und dem Außenteil 103 angeordneten elastischen Elementen 107 auf. Die elastischen Elemente 107 liegen jeweils an Außenflächen des Innenteils 102 und an Innenflächen und/oder Innenkanten des Außenteils 103 an. Das Innenteil 102 ist derart im Außenteil 103 angeordnet, dass zwischen dem Innenteil 102 und dem Außenteil 103 ausgebildete Hohlräume 115 jeweils einen im Wesentlichen in der vorliegenden Geometrie dreieckigen Querschnitt senkrecht zur Längsrichtung 104 aufweisen. Aufgrund der vorliegenden Geometrie des Innenteils 102 und des Außenteils 103 weist das Torsionsfederelement 101 insgesamt beispielhaft vier Hohlräume 115 auf.

In den Hohlräumen 115 sind die elastischen Elemente 107 angeordnet. Zweckmäßigerweise entspricht eine Anzahl der elastischen Elemente 107 einer Anzahl der Hohlräume 115. Die elastischen Elemente 107 lagern das Innenteil 102 vorzugsweise mittig im Außenteil 103, d.h. das Innenteil 102 und das Außenteil 103 sind coaxial entlang der Längsrichtung 104 angeordnet. In alternativen Ausführungsformen ist das Innenteil 102 exzentrisch im Außenteil 103 gelagert, d.h. das Innenteil 102 und das Außenteil 103 sind in Bezug auf die Längsrichtung 104 biaxial angeordnet.

Die elastischen Elemente 107 der Torsionsfederelemente 101 können in die Hohlräume 115 eingesetzt werden, wobei die elastischen Elemente 107 komprimiert werden. Die elastischen Elemente 107 weisen beispielsweise einen Gummi oder einen anderen elastischen Werkstoff auf. Die elastischen Elemente 107 können auch als elastische Einlagen bezeichnet werden.

Vor dem Einsetzen der elastischen Elemente 107 in das Außenteil 103 können sie beispielsweise zunächst zylindrisch ausgeformt sein. Die elastischen Elemente 107 erstrecken sich bezüglich der Längsrichtung 104 beispielhaft über eine gesamte Länge des Außenteil 103, was jedoch nicht zwingend erforderlich. Bezüglich der Längsrichtung 104 kann auch eine Mehrzahl von elastischen Elementen 107 hintereinander angeordnet sein.

Das Innenteil 102 ist durch die elastischen Elemente 107 relativ zum Außenteil 103 derart gelagert, dass bei einer Auslenkung durch Verdrehen des Innenteils 102 und des Außenteils 103 relativ zueinander, insbesondere im Fall einer azimutalen Verdrehung in Bezug auf die Längsrichtung 104, und/oder bei einer linearen Auslenkung des Außenteils 103 relativ zum Innenteil 102 entlang und/oder quer zur Längsrichtung 104, d.h. im Fall einer Axial- und/oder Radialbelastung, eine Rückstellkraft zwischen dem Innenteil 102 und dem Außenteil 103 bewirkt wird. Durch die Wahl geeigneter Materialien für das Außenteil 103, das Innenteil 102 sowie die elastischen Elemente 107 und/oder durch die Wahl einer geeigneten Geometrie des Außenteils 103, des Innenteils 102 sowie der elastischen Elemente 107 lassen sich eine Rückstellkraft-Auslenkungs-Kurve und eine Hysterese der Torsionsfederelemente 101 an eine jeweilige Anwendung anpassen.

Die Torsionsfederelemente 101 sind bezogen auf eine erste Richtung, die senkrecht zur Längsrichtung 104 verläuft, übereinander angeordnet. Ein zweites Torsionsfederelement 111 ist über einem ersten Torsionsfederelement 110 angeordnet. Ein drittes Torsionsfederelement 112 ist über dem zweiten Torsionsfederelement 111 angeordnet. Ein viertes Torsionsfederelement 113 ist über dem dritten Torsionsfederelement 112 angeordnet. Das zweite Torsionsfederelement 111 ist starr mit dem dritten Torsionsfederelement 112 verbunden.

Das zweite Torsionsfederelement 111 und das dritte Torsionsfederelement 112 teilen sich ein gemeinsames Außenteil 114, wodurch sie starr miteinander verbunden sind. Das Außenteil 114 weist zwei Aufnahmeräume zur Aufnahme jeweils eines Innenteils 102 und zumindest eines elastischen Elements 107 auf. Alternativ ist es denkbar, dass das zweite und dritte Torsionsfederelement 111, 112 jeweils ein eigenes Außenteil 103 aufweisen, die starr miteinander verbunden sind. Die Aufnahmeräume sind durch eine Trennwandung 116 des Außenteils 114 voneinander separiert, was jedoch nicht zwingend erforderlich ist. Die Innenteile 102 des zweiten Torsionsfederelements 111 und des dritten Torsionsfederelements 112 sind dadurch entlang der ersten Richtung, also senkrecht zur Längsrichtung 104, in Reihe geschaltet.

Der Schwingungsdämpfer 100 weist ferner zwei Hebelelemente 109 auf. Die Hebelelemente 109 weisen beispielhaft ein metallisches Material auf. Die Hebelelemente 109 können beispielsweise durch Gießen oder mittels eines Druckverfahrens hergestellt werden. Die Hebelelemente 109 sind starr mit den Verbindungselementen 108 verbunden und können beispielsweise an die Verbindungselemente 108 angeschweißt sein. Die Verbindungselemente 108 sind senkrecht zu den Hebelelementen 109 verlaufend angeordnet. Die Hebelelemente 109 sind beispielhaft geradlinig ausgebildet, es werden jedoch noch anders geformte Hebelelemente 109 im Rahmen dieser Beschreibung erläutert.

Die Hebelelemente 109 sind seitlich an den offenen Enden der Torsionsfederelemente 101 angeordnet und über die Verbindungselemente 108 mit den Torsionsfederelementen 101 verbunden. Jedes Hebelelement 109 verbindet jeweils die Innenteile 102 zweier Torsionsfederelemente 101 miteinander. Ein erstes Hebelelement 117 verbindet das erste Torsionsfederelement 110 mit dem zweiten Torsionsfederelement 111. Ein zweites Hebelelement 118 verbindet das dritte Torsionsfederelement 112 mit dem vierten Torsionsfederelement 113.

Der Schwingungsdämpfer 100 kann beispielsweise auch insgesamt vier Hebelelemente 109 aufweisen. Zwei weitere Hebelelemente können entlang der Längsrichtung 104 auf einer den Hebelelementen 109 gegenüberliegenden Seite der Torsionsfederelemente 101 angeordnet sein. Dabei verbindet ein drittes Hebelelement das erste Torsionsfederelement 110 mit dem zweiten Torsionsfederelement 111. Ein viertes Hebelelement 118 verbindet das dritte Torsionsfederelement 112 mit dem vierten Torsionsfederelement 113.

Fig. 2 zeigt schematisch einen erfindungsgemäßen Schwingungsdämpfer 200 gemäß einer ersten Ausführungsform in zwei verschiedenen perspektivischen Ansichten. Der Schwingungsdämpfer 200 gemäß der ersten Ausführungsform weist Ähnlichkeiten zum Schwingungsdämpfer 100 gemäß dem Stand der Technik auf. Im Folgenden werden lediglich Unterschiede zwischen den Schwingungsdämpfern 100, 200 erläutert. Ähnliche oder identische Elemente sind in Fig. 2 mit denselben Bezugszeichen versehen wie in Fig. 1.

Im Gegensatz zum Schwingungsdämpfer gemäß Fig. 1 sind die Torsionsfederelemente 101 beim Schwingungsdämpfer 200 der Fig. 2 anders miteinander verbunden. Das erste Hebelelement 117 verbindet das erste Torsionsfederelement 110 mit dem dritten Torsionsfederelement 112. Das zweite Hebelelement 118 verbindet das zweite Torsionsfederelement 111 mit dem vierten Torsionsfederelement 113. Dadurch sind die Torsionsfederelemente 101 über Kreuz miteinander verbunden, da nicht unmittelbar benachbarte Torsionsfederelemente 101 miteinander verbunden sind, wie dies beim Schwingungsdämpfer 100 gemäß Fig. 1 der Fall ist.

Die Schwingungsdämpfer 100, 200 können jeweils beispielsweise dazu verwendet werden, eine gefederte Lagerung bereitzustellen. Mit der gefederten Lagerung kann beispielsweise ein Motor oder eine Maschine federnd gelagert werden, was insbesondere bei Unwuchtmotoren und Rüttlern bzw. Schwingfördersystemen vorteilhaft hinsichtlich einer Dämpfung von Schwingungen und Vibrationen ist.

Zum Verbinden der Schwingungsdämpfer 100, 200 weisen diese jeweils Befestigungsvorsprünge auf. Die Befestigungsvorsprünge sind jeweils derart starr mit einem Außenteil 103 eines Torsionsfederelements 101 verbunden, dass das Außenteil 103 mit Befestigungselementen an einer Basis und an einer schwingenden Masse befestigt werden kann. Eine erste Befestigungsbrücke ist am Außenteil 103 des ersten Torsionsfederelements 110 angeordnet. Eine zweite Befestigungsbrücke ist am Außenteil 103 des vierten Torsionsfederelements 114 angeordnet. Die Befestigungsbrücken sind an voneinander abgewandten Außenseiten der Außenteile 103 der Torsionsfederelemente 110, 114 angeordnet. Dadurch kann das erste Torsionsfederelement 110 mit der Basis verbunden werden. Das zweite Torsionsfederelement 111 kann mit einer schwingenden Masse verbunden werden. Statt Befestigungsvorsprüngen können auch Befestigungsbrücken verwendet werden, die nicht starr mit den Außenteilen 103 verbunden sind, sondern an den Außenteilen 103 anlegbar sind und mit Befestigungselementen mit der Basis oder der schwingenden Masse verbunden werden können.

Bei Anwendungen mit hohen Isolationsanforderungen bezüglich Vibrationen und Schwingungen, kann es vorteilhaft sein, eine Eigenfrequenz eines Schwingdämpfers 100, 200 möglichst zu reduzieren. Die Eigenfrequenz ist abhängig von einer Länge 119 der Hebelelemente 109. Je länger die Hebelelemente 109 sind, desto geringer kann die Eigenfrequenz des Schwingungsdämpfers ausgebildet sein.

Mit längeren Hebelelementen 109 kann jedoch eine Reduktion einer Traglast des Schwingungsdämpfers 100, 200 einhergehen. Eine Reduktion der Traglast kann eine Verwendung zusätzlicher Schwingungsdämpfer 100, 200 erfordern. Die Traglast eines Schwingungsdämpfers 100, 200 hängt auch von einem von den Hebelelementen 109 eingeschlossenen Winkel 121 ab. Je größer der Winkel 121 gewählt wird, desto größer ist die Traglast des Schwingungsdämpfers 100, 200.

Eine senkrecht zur Längsrichtung 104 bzw. parallel zur ersten Richtung bemessenen Höhe 120 des Schwingungsdämpfers 100, 200 wird durch die Verwendung längerer Hebelelemente 109 erhöht. Dadurch erhöht sich auch ein Abstand eines Schwerpunkts einer Maschine, beispielsweise eines Schwingfördersystems, zu einer Basis. Dieser Abstand ist jedoch aus Stabilitäts- und Sicherheitsgründen möglichst gering zu halten, was insbesondere für Ein- und/oder Ausschaltvorgänge eines Schwingfördersystems gilt, da in diesen Fällen eine Resonanzkurve des Schwingungsdämpfers 100, 200 durchlaufen wird.

Der Schwingungsdämpfer 200 gemäß der ersten Ausführungsform ermöglicht es im Gegensatz zum Schwingungsdämpfer 100 gemäß dem Stand der Technik, dass längere Hebelelemente 109 verwendet werden können, wodurch die Eigenfrequenz des erfindungsgemäßen Schwingungsdämpfers 200 besonders klein sein kann. Gleichzeitig wird der Abstand des Schwerpunkts zur Basis dadurch reduziert, dass die Hebelelemente 109 die Torsionsfederelemente 101 gemäß Fig. 2 über Kreuz miteinander verbinden. Da durch diese Anordnung auch die Höhe 120 des erfindungsgemäßen Schwingungsdämpfers 200 gegenüber der Höhe des bekannten Schwingungsdämpfers 100 reduziert ist, kann ein Erhöhen des Winkels 121 zwischen den Hebelelementen 109 einer übermäßigen Reduktion der Traglast des Schwingungsdämpfers 200 entgegenwirken. Insgesamt kann also die Länge 119 der Hebelelemente 109, die Höhe 120 des Schwingungsdämpfers 200 und der Winkel 121 zwischen den Hebelelementen 109 derart ausbalanciert werden, dass erwünschte bzw. zweckmäßige Wertebereiche für die Eigenfrequenz, die Traglast und den Abstand des Schwerpunkts zur Basis erreicht werden können.

Die Verbindung der Torsionsfederelemente 101 des Schwingungsdämpfers 200 gemäß der ersten Ausführungsform wird dadurch ermöglicht, dass das erste Hebelelement 117 und das zweite Hebelelement 118 entlang der Längsrichtung 104 auf sich gegenüberliegenden Seiten der Torsionsfederelemente 101 angeordnet sind. Eine einseitige Anordnung der Hebelelemente 109 bezüglich der Torsionsfederelemente gemäß Fig. 1 ist im Fall von geradlinig ausgebildeten Hebelelementen 109 nicht möglich, da diese sich gegenseitig im Wege stehen würden.

Ferner ist der Schwingungsdämpfer 200 gemäß der ersten Ausführungsform symmetrisch ausgebildet. Genauer gesagt sind die Torsionsfederelemente 101 bzw. ihre Außenteile 103 bezüglich einer senkrecht zur ersten Richtung verlaufenden Ebene 122 symmetrisch angeordnet. Die Ebene 122 verläuft dabei parallel zur Trennwandung 116 zwischen dem zweiten Torsionsfederelement 111 und dem dritten Torsionsfederelement 112. Die Symmetrie bezieht sich auf eine Anordnung der Außenteile 103.

Auf diese Weise wird der Schwingungsdämpfer 200 bei Belastungen, die senkrecht zur Längsrichtung 104 bzw. parallel zur ersten Richtung wirken,
in Richtung der wirkenden Kräfte komprimiert und nicht etwa schräg. Dadurch sind die auftretenden Belastungen gleicherma-ßen auf die Torsionsfederelemente 101 verteilt, wodurch der Schwingungsdämpfer 200 besonders effizient genutzt werden kann.

Fig. 3 zeigt schematisch einen erfindungsgemäßen Schwingungsdämpfer 300 gemäß einer zweiten Ausführungsform in zwei verschiedenen perspektivischen Ansichten. Der Schwingungsdämpfer 300 gemäß der zweiten Ausführungsform weist Ähnlichkeiten zum Schwingungsdämpfer 200 gemäß der ersten Ausführungsform auf. Im Folgenden werden lediglich Unterschiede zwischen den Schwingungsdämpfern 200, 300 erläutert. Ähnliche oder identische Elemente sind in Fig. 3 mit denselben Bezugszeichen versehen wie in Fig. 2.

Im Gegensatz zum Schwingungsdämpfer 200 gemäß der ersten Ausführungsform sind das erste Hebelelement 117 und das zweite Hebelelement 118 beim Schwingungsdämpfer 300 gemäß der zweiten Ausführungsform gewinkelt ausgebildet. Dadurch kann die Höhe 120 des Schwingungsdämpfers 300 der zweiten Ausführungsform gegenüber der Höhe 120 des Schwingungsdämpfers 200 der ersten Ausführungsform beispielsweise gleich ausgeführt werden, jedoch können die elastischen Elemente 107 einfacher mit den Innenteilen 102 sowie den Außenteilen 103 montiert bzw. zusammengefügt werden. Die elastischen Elemente 107 können beim Schwingungsdämpfer 300 besser visuell beurteilt werden als beim Schwingungsdämpfer 200.

Fig. 4 zeigt schematisch einen erfindungsgemäßen Schwingungsdämpfer 400 gemäß einer dritten Ausführungsform in zwei verschiedenen perspektivischen Ansichten. Der Schwingungsdämpfer 400 gemäß der dritten Ausführungsform weist Ähnlichkeiten zum Schwingungsdämpfer 300 gemäß der zweiten Ausführungsform auf. Im Folgenden werden lediglich Unterschiede zwischen den Schwingungsdämpfern 300, 400 erläutert. Ähnliche oder identische Elemente sind in Fig. 4 mit denselben Bezugszeichen versehen wie in Fig. 3.

Im Gegensatz zum Schwingungsdämpfer 300 gemäß der zweiten Ausführungsform sind das erste Hebelelement 117 und das zweite Hebelelement 118 beim Schwingungsdämpfer 400 gemäß der dritten Ausführungsform entlang der Längsrichtung 104 einseitig an den Torsionsfederelementen 101 angeordnet. Dies wird dadurch ermöglicht, dass das erste Hebelelement 117 beispielsweise gewinkelt ausgebildet ist und das zweite Hebelelement 118 beispielsweise gekrümmt ausgebildet ist und das erste Hebelelement 117 und das zweite Hebelelement 118 ineinandergreifend angeordnet sind. Dabei sind das erste Hebelelement 117 und das zweite Hebelelement 118 jedoch zumindest derart voneinander beabstandet, dass sie bei Belastung des Schwingungsdämpfers 400 nicht aneinanderstoßen.

Der Schwingungsdämpfer 400 gemäß der dritten Ausführungsform ermöglicht es, dass die elastischen Einlagen 107 an der von den Hebelelementen 117, 118 abgewandten Seite einfacher in die Innenteile 102 eingesetzt werden können.

Gemäß einer alternativen Ausführungsform können auf der den Hebelelementen 109 gegenüberliegenden Seite des Schwingungsdämpfers 400 zusätzliche Hebelelemente angeordnet sein. In diesem Fall weist der Schwingungsdämpfer 400 insgesamt vier Hebelelemente 109 auf. Die zusätzlichen Hebelelemente verbinden dieselben Torsionsfederelemente 101 wie die Hebelelemente 109. Die zusätzlichen Hebelelemente 109 verbinden die Torsionsfederelemente 101 also auch über Kreuz. Jedes Torsionselement 101 wird damit beidseitig mit Hebelelementen 109 versehen. Dadurch wird die Kraftaufnahme auf mehr Hebelelemente 109 verteilt.

Alle hier beschriebenen Schwingungsdämpfer 200, 300, 400 können jeweils als einstückige Stahlgussbauteile ausgebildet sein, wobei jeweils zumindest das Innenteil 102, die Verbindungselemente 108 und die Hebelelemente 109 das einstückige Stahlgussbauteil bilden.

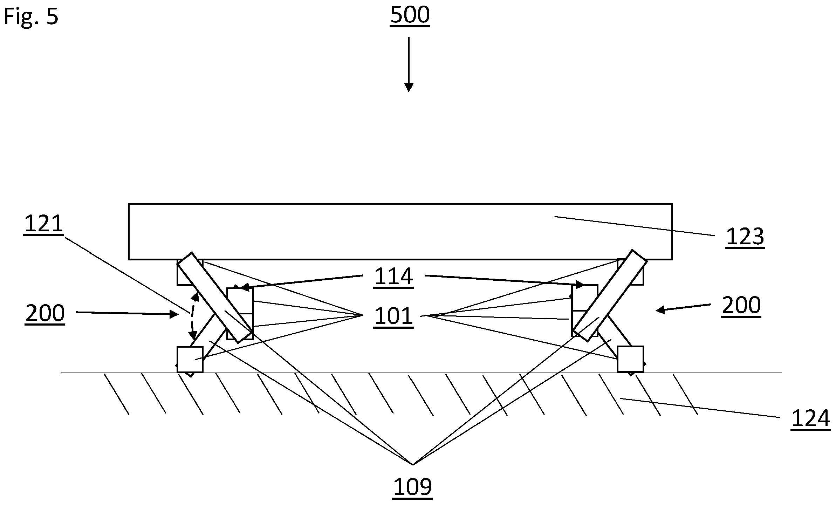

Fig. 5 zeigt schematisch ein Schwingfördersystem 500 in einer Seitenansicht. Das Schwingfördersystem 500 kann beispielsweise als Linearschwinger oder als Kreisschwinger ausgebildet sein. Ähnliche oder identische Elemente sind in Fig. 5 mit denselben Bezugszeichen versehen wie in Fig. 2.

Das Schwingfördersystem 500 weist eine schwingende Masse 123 und beispielhaft insgesamt vier Schwingungsdämpfer 200 auf, von denen in der Ansicht Fig. 5 lediglich zwei dargestellt sind. Es können auch mehr oder weniger als vier Schwingungsdämpfer 200 vorgesehen sein. Lediglich beispielhaft weist das Schwingfördersystem 500 die Schwingungsdämpfer 200 gemäß der ersten Ausführungsform auf. Das Schwingfördersystem 500 kann jedoch auch Schwingungsdämpfer 300, 400 gemäß der zweiten oder der dritten Ausführungsform aufweisen. Die Schwingungsdämpfer 200 sind mit der schwingenden Masse 123 und der Basis 124 verbunden. Hierzu können die bereits erläuterten Befestigungsvorsprünge oder Befestigungsbrücken verwendet werden. Die Ausrichtung der Schwingungsdämpfer 200 ist lediglich beispielhaft aufgezeigt, wobei die gemeinsamen Außenteile 114 des jeweils zweiten und dritten Torsionsfederelements 112, 113 der Schwingungsdämpfer 200 einander zugewandt angeordnet sind. Sie können jedoch beispielsweise auch voneinander abgewandt angeordnet oder in eine gemeinsame Richtung zeigend angeordnet sein. Im letzten Fall ist ein erstes Außenteil 114 eines ersten Schwingungsdämpfers 200 einem zweiten Schwingungsdämpfer 200 zugewandt angeordnet, während ein zweites Außenteil 114 eines zweiten Schwingungsdämpfers 200 dem ersten Schwingungsdämpfer 200 zugewandt angeordnet ist.

### BEZUGSZEICHENLISTE

100 Schwingungsdämpfer gemäß dem Stand der Technik
101 Torsionsfederelemente
102 Innenteil
103 Außenteil
104 Längsrichtung
105 Längskanten des Außenteils
106 Durchgangsbohrung
107 elastisches Element
108 Verbindungselement
109 Hebelelement
110 erstes Torsionsfederelement
111 zweites Torsionsfederelement
112 drittes Torsionsfederelement
113 viertes Torsionsfederelement
114 gemeinsames Außenteil des zweiten und dritten Torsionsfederelements
115 Hohlraum
116 Trennwandung
117 erstes Hebelelement
118 zweites Hebelelement
119 Länge der Hebelelemente
120 Höhe des Schwingungsdämpfers
121 Winkel zwischen den Hebelelementen
122 Symmetrieebene des Schwingungsdämpfers
123 schwingende Masse
124 Basis
200 Schwingungsdämpfer gemäß der ersten Ausführungsform
300 Schwingungsdämpfer gemäß der zweiten Ausführungsform
400 Schwingungsdämpfer gemäß der dritten Ausführungsform
500 Schwingfördersystem

## Patentansprüche

1. Schwingungsdämpfer (200, 300, 400)
mit vier Torsionsfederelementen (101),
wobei jedes Torsionsfederelement (101) ein Innenteil (102), ein Außenteil (103) und zumindest ein elastisches Element (107) aufweist,
wobei das Innenteil (102) im Außenteil (103) angeordnet ist, wobei das elastische Element (107) zwischen dem Innenteil (102) und dem Außenteil (103) angeordnet ist und das Innenteil (102) relativ zum Außenteil (103) derart lagert, dass bei einer Auslenkung des Innenteils (102) und des Außenteils (103) relativ zueinander eine Rückstellkraft zwischen dem Innenteil (102) und dem Außenteil (103) bewirkt wird,
wobei die Torsionsfederelemente (101) bezogen auf eine erste Richtung übereinander angeordnet sind,
wobei ein zweites Torsionsfederelement (111) über einem ersten Torsionsfederelement (110) angeordnet ist,
wobei ein drittes Torsionsfederelement (112) über dem zweiten Torsionsfederelement (111) angeordnet ist,
wobei ein viertes Torsionsfederelement (113) über dem dritten Torsionsfederelement (112) angeordnet ist,
wobei das Außenteil (103) des ersten Torsionsfederelementes (110) zur starren Anbindung des Schwingungsdämpfers (200, 300, 400) ausgebildet ist, **dadurch gekennzeichnet,**
**dass** das Innenteil (102) des ersten Torsionsfederelementes (110) mit dem Innenteil (102) des dritten Torsionsfederelementes (112) starr verbunden ist,
**dass** das zweite Torsionsfederelement (111) starr mit dem dritten Torsionsfederelement (112) verbunden ist,
**dass** das Innenteil (102) des zweiten Torsionsfederelementes (111) mit dem Innenteil (102) des vierten Torsionselementes (113) starr verbunden ist,
**dass** das Außenteil (103) des vierten Torsionselementes (113) zur starren Anbindung des Schwingungsdämpfers (200, 300, 400) ausgebildet ist.

2. Schwingungsdämpfer (200, 300) gemäß Anspruch 1,
wobei die Torsionsfederelemente (101) über Hebelelemente (109) starr miteinander verbunden sind,
wobei das erste Hebelelement (117) und das zweite Hebelelement (118) entlang einer senkrecht zur ersten Richtung verlaufenden Längsrichtung (104) auf sich gegenüberliegenden Seiten der Torsionsfederelemente (101) angeordnet sind.

3. Schwingungsdämpfer (400) gemäß Anspruch 1,
wobei die Torsionsfederelemente (101) über Hebelelemente (109) starr miteinander verbunden sind,
wobei das erste Hebelelement (117) und das zweite Hebelelement (118) entlang einer senkrecht zur ersten Richtung verlaufenden Längsrichtung (104) einseitig an den Torsionsfederelementen (101) angeordnet sind.

4. Schwingungsdämpfer (300, 400) gemäß einem der vorhergehenden Ansprüche 2 und 3,
wobei die Hebelelemente (109) gewinkelt und/oder gekrümmt ausgebildet sind.

5. Schwingungsdämpfer (400) gemäß den Ansprüchen 3 und 4,
wobei die Hebelelemente (109) ineinandergreifend angeordnet sind.

6. Schwingungsdämpfer (200, 300, 400) gemäß einem der vorhergehenden Ansprüche,
wobei die Torsionsfederelemente (101) bezüglich einer senkrecht zur ersten Richtung verlaufenden Ebene (122) symmetrisch angeordnet sind.

7. Schwingungsdämpfer (200, 300, 400) gemäß einem der vorhergehenden Ansprüche,
wobei jedes Außenteil (103) der Torsionsfederelemente (101) ein hohles Mehrkantprofil aufweist,
wobei jedes Innenteil (102) der Torsionsfederelemente (101) ein Mehrkantprofil aufweist,
wobei jeweils ein Innenteil (102) derart in einem Außenteil (103) eines Torsionsfederelements (101) angeordnet ist,
dass Außenkanten der Innenteile (102) jeweils Innenflächen der Außenteile (103) zugewandt angeordnet sind,
wobei jedes Torsionsfederelement (101) eine Mehrzahl von zwischen dem Innenteil (102) und dem Außenteil (103) angeordneten elastischen Elementen (107) aufweist,
wobei die elastischen Elemente (107) jeweils an Außenflächen des Innenteils (102) und an Innenflächen und/oder Innenkanten des Außenteils (103) anliegen.

8. Schwingfördersystem (500)
mit einer schwingenden Masse (123) und einer Mehrzahl von Schwingungsdämpfern (200, 300, 400) gemäß einem der vorhergehenden Ansprüche,
wobei jeder Schwingungsdämpfer (200, 300, 400) mit der schwingenden Masse (123) und einer Basis (124) verbindbar ist.

## Claims

1. A vibration damper (200, 300, 400)
with four torsion spring elements (101),
wherein each torsion spring element (101) has an inner part (102), an outer part (103) and at least one elastic element (107),
wherein the inner part (102) is arranged in the outer part (103),
wherein the elastic element (107) is arranged between the inner part (102) and the outer part (103), and supports the inner part (102) relative to the outer part (103) in such a way that, when the inner part (102) and the outer part (103) are deflected relative to each other, a restoring force is produced between the inner part (102) and the outer part (103),
wherein the torsion spring elements (101) are arranged one on top of the other in relation to a first direction,
wherein a second torsion spring element (111) is arranged above a first torsion spring element (110),
wherein a third torsion spring element (112) is arranged above the second torsion spring element (111),
wherein a fourth torsion spring element (113) is arranged above the third torsion spring element (112),
wherein the outer part (103) of the first torsion spring element (110) is designed for rigidly securing the vibration damper (200, 300, 400), **characterized in that** the inner part (102) of the first torsion spring element (110) is rigidly connected with the inner part (102) of the third torsion spring element (112),
that the second torsion spring element (111) is rigidly connected with the third torsion spring element (112)
that the inner part (102) of the second torsion spring element (111) is rigidly connected with the inner part (102) of the fourth torsion spring element (113),
and that the outer part (103) of the fourth torsion spring element (113) is designed for rigidly securing the vibration damper (200, 300, 400).

2. The vibration damper (200, 300) according to claim 1,
wherein the torsion spring elements (101) are rigidly connected with each other via lever elements (109),
wherein the first lever element (117) and the second lever element (118) are arranged on opposing sides of the torsion spring elements (101) along a longitudinal direction (104) running perpendicular to the first direction.

3. The vibration damper (400) according to claim 1,
wherein the torsion spring elements (101) are rigidly connected with each other via lever elements (109),
wherein the first lever element (117) and the second lever element (118) are unilaterally arranged on the torsion spring elements (101) along a longitudinal direction (104) running perpendicular to the first direction.

4. The vibration damper (300, 400) according to one of the preceding claims 2 and 3,
wherein the lever elements (109) are angled and/or curved in design.

5. The vibration damper (400) according to claims 3 and 4,
wherein the lever elements (109) are arranged in an interlocking manner.

6. The vibration damper (200, 300, 400) according to one of the preceding claims,
wherein the torsion spring elements (101) are symmetrically arranged in relation to a plane (122) running perpendicular to the first direction.

7. The vibration damper (200, 300, 400) according to one of the preceding claims,
wherein each outer part (103) of the torsion spring elements (101) has a hollow polygonal profile,
wherein each inner part (102) of the torsion spring elements (101) has a polygonal profile,
wherein a respective inner part (102) is arranged in an outer part (103) of a torsion spring element (101) in such a way that outer edges of the inner parts (102) are arranged so as to face respective inner surfaces of the outer parts (103),
wherein each torsion spring element (101) has a plurality of elastic elements (107) arranged between the inner part (102) and the outer part (103),
wherein the elastic elements (107) each abut against outer surfaces of the inner part (102) and inner surfaces and/or inner edges of the outer part (103).

8. A vibratory conveyor system (500)
with a vibrating mass (123) and a plurality of vibration dampers (200, 300, 400) according to one of the preceding claims,
wherein each vibration damper (200, 300, 400) can be connected with the vibrating mass (123) and a base (124).

## Revendications

1. Amortisseur de vibrations (200, 300, 400)
avec quatre éléments à ressort de torsion (101),
sachant que chaque élément à ressort de torsion (101) comporte une partie intérieure (102) et une partie extérieure (103) et au moins un élément élastique (107),
sachant que la partie intérieure (102) est disposée dans la partie extérieure (103),
sachant que l'élément élastique (107) est disposé entre la partie intérieure (102) et la partie extérieure (103) et la partie intérieure (102) est logée par rapport à la partie extérieure (103) de telle manière que lors d'une déviation de la partie intérieure (102) et de la partie extérieure (103) l'une par rapport à l'autre, une force de rappel est créée entre la partie intérieure (102) et la partie extérieure (103),
sachant que les éléments à ressort de torsion (101) sont disposés les uns sur les autres en référence à une première direction,
sachant qu'un deuxième élément à ressort de torsion (111) est disposé sur un premier élément à ressort de torsion (110),
sachant qu'un troisième élément à ressort de torsion (112) est disposé sur le deuxième élément à ressort de torsion (111),
sachant qu'un quatrième élément à ressort de torsion (113) est disposé sur le troisième élément à ressort de torsion (112),
sachant que la partie extérieure (103) du premier élément à ressort de torsion (110) est constituée pour le rattachement rigide de l'amortisseur de vibrations (200, 300, 400), ***caractérisé en ce que***
la partie intérieure (102) du premier élément à ressort de torsion (110) est reliée de façon rigide à la partie intérieure (102) du troisième élément à ressort de torsion (112),
***en ce que*** le deuxième élément à ressort de torsion (111) est relié de façon rigide au troisième élément à ressort de torsion (112),
***en ce que*** la partie intérieure (102) du deuxième élément à ressort de torsion (111) est reliée de façon rigide à la partie intérieure (102) du quatrième élément à ressort de torsion (113),
***en ce que*** la partie extérieure (103) du quatrième élément à ressort de torsion (113) est constituée pour le rattachement rigide de l'amortisseur de vibrations (200, 300, 400).

2. Amortisseur de vibrations (200, 300) selon la revendication 1,
sachant que les éléments à ressort de torsion (101) sont reliés entre eux de façon rigide par des éléments élévateurs (109),
sachant que le premier élément élévateur (117) et le deuxième élément élévateur (118) sont disposés sur des côtés opposés des éléments à ressort de torsion (101) le long d'une première direction longitudinale (104) passant perpendiculairement à la première direction.

3. Amortisseur de vibrations (400) selon la revendication 1,
sachant que les éléments à ressort de torsion (101) sont reliés entre eux de façon rigide par des éléments élévateurs (109),
sachant que le premier élément élévateur (117) et le deuxième élément élévateur (118) sont disposés unilatéralement sur les éléments à ressort de torsion (101) le long d'une première direction longitudinale (104) passant perpendiculairement à la première direction.

4. Amortisseur de vibrations (300, 400) selon l'une quelconque des revendications 2 et 3,
sachant que les éléments élévateurs (109) sont constitués coudés et/ou courbés.

5. Amortisseur de vibrations (400) selon les revendications 3 et4,
sachant que les éléments élévateurs (109) sont disposés s'engrenant les uns dans les autres.

6. Amortisseur de vibrations (200, 300, 400) selon l'une quelconque des revendications précédentes,
sachant que les éléments à ressort de torsion (101) sont disposés de façon symétrique eu égard à un plan (122) passant perpendiculairement à la première direction.

7. Amortisseur de vibrations (200, 300, 400) selon l'une quelconque des revendications précédentes,
sachant que chaque partie extérieure (103) des éléments à ressort de torsion (101) comporte un profilé polygonal creux,
sachant que chaque partie intérieure (102) des éléments à ressort de torsion (101) comporte un profilé polygonal,
sachant qu'à chaque fois une partie intérieure (102) est disposée dans une partie extérieure (103) d'un élément à ressort de torsion (101) de telle manière que les bords extérieurs des parties intérieures (102) sont disposés respectivement tournés vers les surfaces intérieures des parties extérieures (103),
sachant que chaque élément à ressort de torsion (101) comporte une pluralité d'éléments élastiques (107) disposés entre la partie intérieure (102) et la partie extérieure (103),
sachant que les éléments élastiques (107) viennent s'appliquer respectivement aux surfaces extérieures de la partie intérieure (102) et aux surfaces intérieures et/ou bords intérieurs de la partie extérieure (103).

8. Amortisseur de vibrations (500)
avec une masse vibrante (123) et une pluralité d'amortisseurs de vibrations (200, 300, 400) selon l'une quelconque des revendications précédentes,
sachant que chaque amortisseur de vibrations (200, 300, 400) peut être relié à la masse vibrante (123) et à une base (124).
